# EUROPÄISCHE PATENTSCHRIFT

(11) **EP 3 083 107 B1**
(45) Veröffentlichungstag und Bekanntmachung des Hinweises auf die Patenterteilung: **04.12.2019**
(21) Anmeldenummer: 14821630.2
(22) Anmeldetag: 19.12.2014
(51) Int. Cl.: B22F 1/00, B22F 9/08

(54) **VORRICHTUNG UND VERFAHREN ZUM TIEGELFREIEN SCHMELZEN EINES MATERIALS UND ZUM ZERSTÄUBEN DES GESCHMOLZENEN MATERIALS ZUM HERSTELLEN VON PULVER**
DEVICE AND METHOD FOR MELTING A MATERIAL WITHOUT A CRUCIBLE AND FOR ATOMIZING THE MELTED MATERIAL IN ORDER TO PRODUCE POWDER
DISPOSITIF ET PROCÉDÉ DE FUSION EN ZONE FLOTTANTE D'UN MATÉRIAU ET D'ATOMISATION DU MATÉRIAU FONDU POUR FABRIQUER DE LA POUDRE

(30) Priorität: 20.12.2013 DE 102013022096
(43) Veröffentlichungstag der Anmeldung: 26.10.2016
(73) Patentinhaber: NANOVAL GmbH & Co. KG, 13403 Berlin (DE)
(72) Erfinder: GERKING, Lüder, 14195 Berlin (DE); GERKING, Christian, 76694 Forst (DE); STOBIK, Martin, 12163 Berlin (DE); HEINZ, Rico, 16559 Liebenwalde (DE)
(74) Vertreter: Pfenning, Meinig & Partner mbB
(86) Internationale Anmeldenummer: PCT/EP2014/078849
(87) Internationale Veröffentlichungsnummer: WO 2015/092008

(56) Entgegenhaltungen:
- EP-A1- 0 220 418
- EP-A2- 0 444 767
- EP-B1- 1 765 536
- DE-A1- 4 102 101

## Beschreibung

Die Erfindung betrifft eine Vorrichtung und ein Verfahren zum tiegelfreien Schmelzen eines Materials und zum Zerstäuben des geschmolzenen Materials zum Herstellen von Pulver, insbesondere zum Herstellen von Metall- oder Keramikpulver.

In vielen Bereichen der Technik werden Metallpulver verwendet. So werden Metallpulver im Pulverspritzgussverfahren (MIM) oder auch in den generativen Verfahren, auch additive Verfahren genannt, erzeugt wie Lasersintern/ -schmelzen und Elektronenstrahlschmelzen und können zu komplexen dreidimensionalen Strukturen verschmolzen werden. Oft werden Metallpulver mit Korngrößen im Mikrometerbereich benötigt. Dabei ist es für viele Anwendungen von großer Wichtigkeit, dass die Korngröße des Metallpulvers eine maximale Korngröße nicht überschreitet oder dass eine Schwankungsbreite einer statistischen Korngrößeverteilung des hergestellten Pulvers möglichst klein ist, dass die Korngröße von einer gewünschten Korngröße also möglichst wenig abweicht.

Aus der Patentschrift DE10340606B4 ist es bekannt, Metall in einem Tiegel zu schmelzen und mittels einer Lavaldüse zu Metallpulver zu zerstäuben. Dabei ist es von entscheidender Bedeutung, den Schmelzenippel, mit dem das im Tiegel geschmolzene Metall in die Düse eingeleitet wird, gegenüber dem kalten Zerstäubungsgas thermisch abzuschirmen, da die Schmelze sonst zu stark abkühlt, was die Qualität des erzeugten Pulvers (Kornform, Korngröße, Korngrößenverteilungsbreite) erheblich verschlechtert oder die Zerstäubung unmöglich macht. In DE10340606B4 wurde daher eine entsprechende Abschirmung vorgeschlagen. Eine Herausforderung bestand darin, die Abschirmung derart auszubilden, dass sie das Strömungsprofil des Zerstäubungsgases vor dem Eintritt in die Düse nicht nachteilig beeinflusst, denn auch dieses Strömungsprofil hat einen erheblichen Einfluss auf die Qualität des erzeugten Pulvers.

Ein Nachteil der in DE10340606B4 beschriebenen Vorrichtung besteht darin, dass im Tiegel keine Materialien geschmolzen und pulverisiert werden können, die mit der Tiegelbeschichtung chemisch reagieren und infolge dieser Reaktion verunreinigt werden. Dieses Problem tritt beispielsweise beim Tiegelschmelzen von Titan auf. Daher wurde bereits in DE4102101A1 eine Vorrichtung zum tiegelfreien Schmelzen von Metall vorgeschlagen. Dabei wird ein Metallstab mittels einer Induktionsspule geschmolzen und anschließend ebenfalls durch eine Zerstäubungsdüse zerstäubt. Bei der Vorrichtung nach DE4102101A1 tritt jedoch in noch viel erheblicherem Maße als bei der Vorrichtung nach DE10340606B4 das Problem auf, dass der beim Schmelzen des Stabes erzeugte Schmelzestrom durch das Zerstäubungsgas stark gekühlt wird.

Um dieses Problem zu umgehen, wird bei der Vorrichtung nach DE4102101A1 eine gänzlich andere Art der Zerstäubung vorgeschlagen. Danach weist die Düse eine erste Öffnung auf, durch die der Schmelzestrom in die Düse eingeführt wird. Das Zerstäubungsgas wiederum wird durch eine von der ersten Öffnung verschiedene seitliche Öffnung der Düse, also in einer Richtung senkrecht zur Fließrichtung des Schmelzestromes durch die Düse, in die Düse eingeleitet. In der Düse trifft das Zerstäubungsgas mit hohem Impuls senkrecht auf den Schmelzestrom und zerschlägt den Schmelzestrom, so dass Tropfen gebildet werden, die anschließend zu Pulver einfrieren. Im Wesentlichen dieselbe Art der Zerstäubung wird auch in EP1765536B1 beschrieben. Durch das seitliche Einleiten des Zerstäubungsgases in die Düse kann das Auskühlen des Schmelzestroms vor dem Eintreten in die Düse teilweise verhindert werden.

Es hat sich jedoch gezeigt, dass mit der in DE4102101A1 und EP1765536B1 vorgeschlagenen Art der Zerstäubung oft nur Pulver mit einer vergleichsweise großen Korngrößenverteilungsbreite herstellbar sind. Eine gewünschte Korngröße ist also u. U. mit nur geringer Genauigkeit einstellbar, so dass ggf. viel Ausschuss anfällt. Dadurch können die Herstellungskosten erhöht werden.

Der vorliegenden Erfindung liegt somit die Aufgabe zugrunde, eine Vorrichtung und ein Verfahren zu schaffen, mit denen eine möglichst große Vielzahl von Materialien pulverisiert werden kann, wobei eine Korngröße und die Korngrößenverteilung des hergestellten Pulvers möglichst genau einstellbar sein sollen.

Diese Aufgabe wird gelöst durch eine Vorrichtung und ein Verfahren gemäß den unabhängigen Ansprüchen. Spezielle Ausführungsformen sind in den Unteransprüchen beschrieben.

Vorgeschlagen wird also eine Vorrichtung zum tiegelfreien Schmelzen eines Materials und zum Zerstäuben des geschmolzenen Materials zum Herstellen von Pulver, umfassend:
eine Zerstäubungsdüse;
eine Induktionsspule mit Windungen, die in Richtung auf die Induktionsspule wenigstens abschnittweise enger werden; und
einen wenigstens teilweise in die Induktionsspule eingeführten Materialstab;
wobei die Induktionsspule eingerichtet ist, das Material des Materialstabes zum Erzeugen eines Schmelzestromes zu schmelzen; und
wobei die Induktionsspule und die Zerstäubungsdüse derart angeordnet sind, dass der Schmelzestrom zum Zerstäuben des Schmelzestromes mittels eines Zerstäubungsgases, das in die Zerstäubungsdüse einleitbar ist, durch eine erste Öffnung der Zerstäubungsdüse in die Zerstäubungsdüse einführbar ist.

Die Zerstäubungsdüse ist derart ausgebildet, dass das Zerstäubungsgas nur durch die genannte erste Öffnung der Zerstäubungsdüse in die Zerstäubungsdüse einleitbar ist oder eingeleitet wird. Zudem ist die Zerstäubungsdüse eingerichtet, das Zerstäubungsgas in einer Richtung parallel zum Schmelzestrom, vorzugsweise parallel zu einer Fließrichtung des Schmelzestromes durch die Zerstäubungsdüse, wenigstens bis auf die Schallgeschwindigkeit des Zerstäubungsgases zu beschleunigen. Der Materialstab und die Induktionsspule sind ferner derart angeordnet, dass der Schmelzestrom vor dem Eintreten des Schmelzestroms in die Zerstäubungsdüse, also typischerweise in einem Bereich zwischen einem der Zerstäubungsdüse zugewandten Ende des Materialstabes und der Zerstäubungsdüse, durch die Induktionsspule induktiv heizbar ist oder geheizt wird. Vorzugsweise ist die Induktionsspule, insbesondere an ihrem der Zerstäubungsdüse zugewandten Ende, derart ausgebildet, dass der Schmelzestrom dort, wo er frei fließt, derart induktiv heizbar ist oder geheizt wird, dass er nicht erkaltet. Zum Beispiel wird er derart geheizt, dass er eine für den Zerstäubungsprozess notwendige Mindesttemperatur behält. In dem Bereich, in dem der Schmelzestrom frei fließt, also normalerweise zwischen dem der Zerstäubungsdüse zugewandten Ende des Materialstabes und der Zerstäubungsdüse, ist der Schmelzestrom dem Zerstäubungsgas, das ihn dort an allen Seiten einschließt und umströmt, am meisten ausgesetzt.

Vorgeschlagen wird ferner ein Verfahren zum Herstellen von Pulver durch tiegelfreies Schmelzen eines Materials und durch Zerstäuben des geschmolzenen Materials, umfassend die Schritte:
wenigstens teilweises Einführen eines Materialstabes in eine wenigstens abschnittweise konisch sich verjüngende Induktionsspule;
Beaufschlagen der Induktionsspule mit einer Wechselspannung zum Schmelzen des Materialstabes und zum Erzeugen eines Schmelzestromes;
Einführen des Schmelzestromes in eine Zerstäubungsdüse durch eine erste Öffnung der Zerstäubungsdüse; und
Einleiten eines Zerstäubungsgases in die Zerstäubungsdüse und Zerstäuben des Schmelzetroms mittels des Zerstäubungsgases;
wobei das Zerstäubungsgas nur durch die erste Öffnung der Zerstäubungsdüse in die Zerstäubungsdüse eingeleitet wird;
wobei das durch die erste Öffnung in die Zerstäubungsdüse einzuleitende und/oder eingeleitete Zerstäubungsgas in einer Richtung parallel zu einer Fließrichtung des Schmelzestroms, vorzugsweise parallel zu einer Fließrichtung des Schmelzestroms durch die Zerstäubungsdüse, wenigstens bis auf die Schallgeschwindigkeit des Zerstäubungsgases beschleunigt wird, so dass sich der Schmelzestrom aufteilt oder sogar zerplatzt und Pulver mit einer Korngröße im Mikrometerbereich und/oder im Submikrometerbereich erzeugt wird; und
wobei der Schmelzestrahl vor dem Eintreten des Schmelzestrahls in die Zerstäubungsdüse durch die Induktionsspule induktiv geheizt wird.

Die Zerstäubungsdüse, die Induktionsspule und der Materialstab werden im Folgenden der Einfachheit halber auch einfach Düse, Spule und Stab genannt. Es wird also das gesamte oder im Wesentlichen das gesamte zum Zerstäuben der Schmelze bestimmte Zerstäubungsgas durch dieselbe erste Öffnung der Düse in die Düse eingeleitet wie der Schmelzestrom. Die erste Öffnung der Düse ist üblicherweise der Spule und dem Stab zugewandt. Durch eine zweite Öffnung der Düse treten dann normalerweise das Zerstäubungsgas und der ganz oder teilweise pulverisierte Schmelzestrom wieder aus der Düse aus. Die Düse weist also bevorzugt neben der ersten und der zweiten Öffnung keine weiteren Öffnungen auf, insbesondere keine seitlichen Öffnungen zum Einleiten von Gas senkrecht oder im Wesentlichen senkrecht zur Düsenachse, wie dies z. B. bei den Vorrichtungen nach DE4102101A1 und EP1765536B1 der Fall ist.

Es hat sich gezeigt, dass mit der hier vorgeschlagenen Vorrichtung und mit dem hier vorgeschlagenen Verfahren eine Vielzahl unterschiedlicher Materialien tiegelfrei mit sehr guten Resultaten zum Herstellen von Pulver zerstäubt werden können. Es können also Pulver mit einer schmalen Korndurchmesserverteilungsbreite hergestellt werden, wobei der gewünschte Korndurchmesser und -verteilung durch eine Anzahl von Prozessparametern und/oder Vorrichtungsparametern gut einstellbar ist. Ein wesentlicher Vorteil besteht darin, dass auch Materialien zerstäubbar sind, die nicht in einem Tiegel schmelzbar sind, weil das zu verdüsende Material bei höheren Temperaturen schmilzt als das Tiegelmaterial oder mit diesem reagiert und so verunreinigt wird. Durch das Beheizen des Schmelzestroms mittels der Spule wird ein das Abkühlen oder Einfrieren des Schmelzestrom vor dem Zerstäuben effektiv verhindert.

Normalerweise sind der Materialstab, die Spule und die Zerstäubungsdüse entlang einer vertikalen Richtung ausgerichtet, entlang derer der Schwerkraft wirkt. Der Schmelzestrom fällt dann also unter dem Einfluss der Schwerkraft oder wenigstens auch unter dem Einfluss der Schwerkraft durch die Zerstäubungsdüse. Der Stab, die Spule und die Düse können jeweils eine zylindrische Symmetrie oder annähernd eine zylindrische Symmetrie aufweisen, wobei der Stab, die Spule und die Düse dann typischerweise derart angeordnet sind, dass ihre Symmetrieachsen auf derselben Geraden angeordnet sind. Der Stab, die Spule und die Düse können aber grundsätzlich beliebig geformte Querschnitte aufweisen. Beispielsweise kann die Düse einen schlitzförmigen, rechteckigen, ovalen oder runden Querschnitt haben. Ebenso kann auch der Stab einen runden, ovalen, oder vieleckigen Querschnitt haben. Der Stab kann auch plattenförmig ausgebildet sein. Die Formen der Spule und der Düse sind dann der Plattenform des Stabes entsprechend anzupassen.

Die Spule weist üblicherweise wenigstens drei Windungen auf, vorzugsweise zwischen drei und sechs Windungen. Bevorzugt sollten die Abmessungen der Spule und des Stabes aneinander angepasst sein, so dass zum Schmelzen des Stabes ein effizienter Energieübertrag von der Spule auf den Stab erfolgen kann. Vorzugsweise wird die Spule mit einer Wechselspannung f beaufschlagt, die etwa zwischen 50 kHz und 200 kHz liegt, vorzugsweise zwischen 100 kHz und 150 kHz. Die Spule wird zum Schmelzen des Stabes je nach Material des Stabes üblicherweise mit einer Leistung zwischen 10 und 150 kW betrieben.

Eine Querschnittsfläche der Düse kann entlang der Düsenachse in der Fließrichtung des Schmelzestroms durch die Düse durchgehend oder wenigstens abschnittweise abnehmen. Zum Beispiel kann die Querschnittsfläche der Düse entlang der Düsenachse in der Fließrichtung linear oder stärker als linear abnehmen. Die Düse ist als Lavaldüse ausgebildet.

Die Lavaldüse kann dann eine radial von der Achse der Lavaldüse weit auslaufende Kontur haben, so dass die Strömung vom Zustand ruhender Umgebung zum beschleunigten Gas durch die Lavaldüse bereits bei großem Abstand zur Achse der Lavaldüse geführt wird. Ein Durchmesser der Kontur der Lavaldüse kann z. B. im Bereich der ersten Öffnung der Düse in etwa das 0.5-fache bis das Dreifache des Spulendurchmessers betragen, vorzugsweise das 0.8-fache bis das Doppelte. Bei dem genannten Spulendurchmesser kann es sich um den Spulendurchmesser am von der Düse abgewandten Ende der Spule oder am der Düse zugewandten Ende der Spule handeln.

Eine Variante ist die sogenannte Zweistufendüse, bei der zwei unterschiedlich gekrümmte Düsenkonturen so ineinander übergehen, dass eine ringförmige Kante in einer Ebene senkrecht zur Düsenachse entsteht.

Die Vorrichtung weist typischerweise eine Hebe- und Senkvorrichtung zum Halten, Heben und Senken des Materialstabes auf. Um die Position des der Düse zugewandten Endes des Stabes, an dem der Stab vornehmlich geschmolzen wird, während der Durchführung des Verfahrens annähernd konstant zu halten, wird der Stab z. B. kontinuierlich in die Spule nachgeführt. Damit das Schmelzen des Stabes möglichst gleichmäßig erfolgt, ist die Hebe- und Senkvorrichtung vorzugsweise zusätzlich eingerichtet, den Stab um die Stabachse zu drehen, z. B. mit einer Drehzahl von wenigstens 1 min⁻¹.

Wenn im Folgenden vom Materialstab die Rede ist, ist der Materialstab gemeint, soweit er fest und noch nicht geschmolzen ist. Die Schmelze oder der Schmelzestrom sollen, insbesondere in Bezug auf Abstandsmessungen zwischen dem Stab und anderen Komponenten der Vorrichtung, nicht als Teil des Materialstabs betrachtet werden.

Das Material, aus dem der Materialstab gebildet ist, kann Metall oder Keramik umfassen. Das Material des Materialstabes, aus dem das Pulver hergestellt wird, kann z. B. eines der folgenden Metalle oder eine Legierung eines oder mehrerer der folgenden Metalle enthalten: Titan, Aluminium, Eisen, Zirkonium, Hafnium, Vanadium, Niob, Tantal, Chrom, Molybdän, Wolfram, Rhenium, Nickel, Cobalt.

Mit dem vorgeschlagenen Verfahren kann Pulver mit einem massebezogenen mittleren Korndurchmesser von weniger als 50 µm hergestellt werden. Der mittlere massebezogene Korndurchmesser kann auch weniger als 10 µm oder weniger als 1 µm betragen.

Eine Breite der Korngrößenverteilung des hergestellten Pulvers ist durch die Durchmesser d₈₄ und d₅₀ charakterisierbar. Diese sind wie folgt definiert: 84 Prozent des Pulvers (Gewichtsprozent) haben einen Korndurchmesser, der kleiner ist als d₈₄ und 50 Prozent des Pulvers (Gewichtsprozent) haben einen Korndurchmesser, der kleiner ist als d₅₀. Mit dem vorgeschlagenen Verfahren sind z. B. Pulver herstellbar, bei denen gilt: d₈₄/d₅₀ ≤ 2.8, vorzugsweise d₈₄/d₅₀ ≤ 2.3, besonders d₈₄/d₅₀ ≤ 1.8.

Zur Erzielung einer besonders schmalen Korngrößenverteilung kann ein kleinster Innendurchmesser dₘᵢₙ der Zerstäubungsdüse kleiner sein als 7 mm, vorzugsweise kleiner als 5 mm, besonders vorzugsweise kleiner als 3 mm. Der Innendurchmesser ist dabei jeweils senkrecht zur Düsenachse oder senkrecht zur Fließrichtung des Schmelzestroms durch die Düse zu bestimmen. Typischerweise tritt der kleinste Innendurchmesser an der Position entlang der Düsenachse auf, an der die Düse oder das Düsenrohr die kleinste Querschnittsfläche aufweist. Der Innendurchmesser wird vorzugsweise entlang einer Geraden bestimmt, die durch den Mittelpunkt des Querschnitts verläuft.

Zur Charakterisierung der Vorrichtung kann eine Ebene dienen, die die Düsenachse oder die Fließrichtung des Schmelzestroms durch die Düse senkrecht schneidet, und zwar an derjenigen Position entlang der Düsenachse oder entlang der Fließrichtung, an der die Querschnittsfläche der Zerstäubungsdüse, insbesondere also die Querschnittsfläche des von der Düse gebildeten Kanals, minimal ist. Der Einfachheit halber wird diese Ebene im Weiteren auch als die Ebene des engsten Querschnitts bezeichnet.

Es können bauliche Maßnahmen ergriffen werden, um die Schmelze der Düse hinreichend nahe zuzuführen, so dass sie möglichst gut von der Gasströmung des Zerstäubungsgases in beschriebener Weise erfasst werden kann. Aufgrund der notwendigen Nähe der Spule zum Materialstab gerade im untersten Bereich, wo das Abschmelzen vollständig erfolgen soll, damit keine Stabreste asymmetrisch oder außermittig übrigbleiben, wo also ein Auskühlen und Einfrieren des Schmelzestroms auf dem Weg zur Düse aufgrund der Kühlung durch die aus energetischen Gründen meist kalten, den Schmelzestrom erfassenden und beschleunigenden Gasströmung unbedingt vermieden werden sollte, ergibt sich ein bevorzugter maximaler Abstand des Abschmelzbereichs von der Düse. Vorzugsweise erfolgt auf diesem Weg bis zum engsten Querschnitt der Düse eine Druckerhöhung im Innern des Schmelzestrahls aufgrund der Schubspannungen zwischen der schnelleren Gasströmung und ihm, während bei anderen Verfahren ein kaltes Gas nur relativ kurz mit der Schmelze in Kontakt ist, da es keine gemeinsame Richtung mit dieser hat, weder vor noch nach diesem Kontakt - höchstens stochastisch, also in zufälligen Teilen und außerdem auch keine lange Kontaktzeit braucht, weil das Gas die hohe kinetische Energie bereits besitzt und somit keine längere gemeinsame Wegstrecke mit möglicher und ungewollter Auskühlung zurückgelegt wird.

Der Materialstab und die Zerstäubungsdüse können darum derart angeordnet werden, dass ein kleinster Abstand L zwischen dem Materialstab und der Ebene des engsten Querschnitts kleiner ist als 7·dₘᵢₙ, kleiner als 6·dₘᵢₙ, kleiner als 5·dₘᵢₙ oder kleiner als 4·dₘᵢₙ. Zum Beispiel kann so einem zu starken Abkühlen des Schmelzestroms vor dem Zerstäuben entgegengewirkt werden. Typischerweise hat der Stab an einem Ende des Stabes, das der Düse zugewandt ist, in etwa eine Kegelform. L ist dann üblicherweise der Abstand der Kegelspitze von der Ebene des engsten Querschnitts.

Die Zerstäubungsdüse und die Induktionsspule sind als separate Bauteile ausgeführt. Die Induktionsspule ist dann also nicht in die Düse integriert. In Fließrichtung ist die Spule bei dieser Ausführungsform normalerweise vor bzw. oberhalb der Düse angeordnet. Die Vorrichtung ist damit besonders flexibel. Zum Beispiel kann die Spule leicht ausgetauscht oder relativ zur Düse justiert werden. Zudem kann effektiver vermieden werden, dass die Düse durch die Spule zu sehr erwärmt oder sogar geschmolzen wird.

Um ein zu starkes Abkühlen oder sogar ein Einfrieren des Schmelzestromes vor dem Zerstäuben zu vermeiden und den Fluss des Schmelzestromes zu unterstützen sind die Induktionsspule und die Zerstäubungsdüse derart angeordnet, dass ein kleinster Abstand aₘᵢₙ zwischen der Induktionsspule und der Ebene des engsten Querschnitts kleiner ist als 4·dₘᵢₙ, kleiner als 3·dₘᵢₙ oder kleiner als 2·dₘᵢₙ. Vorzugsweise wird der Abstand aₘᵢₙ dabei in einer Richtung parallel zur Düsenachse oder parallel zur Fließrichtung des Schmelzestromes bestimmt. Die Spule kann auch bis unmittelbar an die Düse heranreichen oder mit der Düse in Kontakt sein. In diesem Fall sollte die Düse aus einem nicht leitenden Material gebildet sein.

Um ein elektromagnetisches Ankoppeln der Düse an die Spule zu unterbinden und eine induktive Erwärmung der Düse durch die Spule möglichst zu vermeiden, kann die Düse aus einem Material gebildet sein, das entweder ein sehr guter oder ein sehr schlechter elektrischer Leiter ist. Ist das Düsenmaterial ein sehr guter Leiter, so treten kaum ohmsche Verluste auf, die in Form von Wärme in der Düse dissipiert werden. Ist das Düsenmaterial dagegen ein sehr schlechter Leiter, so werden keine oder so gut wie keine Wirbelströme in der Düse induziert, was ebenfalls nicht oder kaum zu ohmschen Verlusten führt. Für einen spezifischen elektrischen Widerstand des Düsenmaterials gilt daher vorzugsweise ρ ≤ 0.02·10⁻⁶ Ωm oder ρ ≥ 10⁻² Ωm.

Eine weitere spezielle Ausführungsform der Vorrichtung ist gekennzeichnet durch eine Hochdruckkammer, eine mit der Hochdruckkammer über die Zerstäubungsdüse in Fluidverbindung stehende Zerstäubungskammer, erste Druckregelmittel zum Einleiten des Zerstäubungsgases in die Hochdruckkammer und zum Regeln eines ersten Gasdrucks p₁ in der Hochdruckkammer sowie zweite Druckregelmittel zum Regeln eines zweiten Gasdrucks p₂ in der Zerstäubungskammer, wobei die ersten und die zweiten Druckregelmittel eingerichtet sind, die Drücke p₁ und p₂ zum Beschleunigen des Zerstäubungsgases in einer Richtung parallel zur Fließrichtung des Schmelzestromes derart einzustellen, dass gilt: p₁/p₂ > 1.8 und p₁ > 10 bar. Der erste Gasdruck p₁ ist also größer als der zweite Gasdruck p₂.

Typischerweise beträgt der zweite Gasdruck p₂ in der Zerstäubungskammer in etwa 1 bar. Durch das Einstellen der Gasdrücke p₁ und p₂ kann die Beschleunigung des Zerstäubungsgases vor der Düse, im Inneren der Düse und hinter der Düse beeinflusst und geregelt werden. So können auch die vom Zerstäubungsgas auf den Schmelzestrom übertragenen Schubspannungen und ggf. der Grad des Zentrierens und Dehnens des Schmelzestroms beeinflusst werden, insbesondere auch bereits vor dem Eintreten des Schmelzestroms in die Düse und/oder vor dem Zerstäuben des Schmelzestroms. Die ersten und zweiten Druckregelmittel können z. B. jeweils eine oder mehrere Pumpen, Leitungen, Düsen, Ventile, einen Kompressor und/oder einen Hochdruckgastank umfassen.

Besonders vorteilhaft ist es, den Materialstab vor allem an seinem der Düse zugewandten Ende, typischerweise also am unteren Ende, möglichst effektiv und möglichst gleichmäßig zu heizen, da hier das Schmelzen des Stabes stattfindet. Auch sollte das der Düse zugewandte Ende des Materialstabes innerhalb der Spule angeordnet sein, also vorzugsweise nicht in Fließrichtung über das der Düse zugewandte Ende der Spule hinausragen.

Weiterhin ist es vorteilhaft, wenn wenigstens eine der Windungen der Induktionsspule, die im Bereich des der Düse zugewandten Endes des Materialstabes angeordnet ist, zum Erzeugen eines in diesem Bereich in Bezug auf die Stabachse möglichst symmetrischen elektromagnetischen Feldes wenigstens abschnittweise senkrecht zur Stabachse verläuft. Vorzugsweise verläuft wenigstens die der Düse zugewandte letzte Windung der Spule wenigstens abschnittweise senkrecht zur Stabachse oder zur Fließrichtung des Schmelzestromes. Zum Beispiel kann wenigstens die letzte Windung die Stabachse oder eine gedachte Verlängerung der Stabachse in einer Ebene senkrecht oder nahezu senkrecht zur Stabachse vollständig oder nahezu vollständig umschließen.

So kann wenigstens eine der Windungen, insbesondere wenigstens die letzte Windung, als an einer Stelle elektrisch unterbrochener Ringleiter ausgebildet sein, vorzugsweise als nahezu geschlossener Ringleiter. Die Unterbrechung kann als Luftspalt oder durch ein isolierendes Material realisiert sein. Der Begriff Ringleiter soll nicht nur Leiter in Gestalt eines Ringes einschließen. Vielmehr soll er eine Vielzahl von Formen umfassen. Entscheidend ist, dass der Ringleiter über den größten Teil seiner Länge im Wesentlichen in einer Ebene verläuft und eine nahezu geschlossene Leiterschleife bildet. Zum Beispiel kann der Ringleiter zu wenigstens 50 Prozent, zu wenigstens 70 Prozent oder zu wenigstens 90 Prozent in einer Ebene senkrecht oder im Wesentlichen senkrecht zur Stabachse bzw. senkrecht oder im Wesentlichen senkrecht zur Fließrichtung des Schmelzestromes verlaufen. Der Ringleiter kann die Stabachse oder eine gedachte Verlängerung der Stabachse zu wenigstens 180 Grad, zu wenigstens 225 Grad, zu wenigstens 270 Grad, zu wenigstens 315 Grad oder zu beinahe 360 Grad senkrecht oder nahezu senkrecht zur Stabachse umschließen. Der Ringleiter kann weitgehend kreisförmig, oval, rechteckig oder vieleckig ausgebildet sein. Er kann in etwa eine Hufeisenform haben. Der Ringleiter muss keine symmetrische Form haben. Vorzugsweise ist der Ringleiter jedoch rotationssymmetrisch oder beinahe rotationssymmetrisch zur Stabachse oder zur Fließrichtung des Schmelzestromes angeordnet. So kann der Ringleiter z. B. in etwa kreisförmig ausgebildet sein.

Bei einer speziellen Ausführungsform kann die Spule wenigstens zwei Ringleiter der beschriebenen Art aufweisen. Die wenigstens zwei Ringleiter können aus demselben Leitermaterial gebildet sein, z. B. aus Kupfer. Die wenigstens zwei Ringleiter können elektrisch parallel geschaltet sein. Damit die parallel geschalteten Ringleiter jeweils einen annähernd gleichen elektrischen Widerstand haben und/oder entlang der Stabachse eine möglichst homogene Feldverteilung erzeugen, können Ringleiter mit unterschiedlichem Umfang verschieden ausgebildete Querschnitte haben und/oder entlang der Stabachse unterschiedliche Abstände voneinander haben. Bei dem genannten Querschnitt handelt es sich um den Querschnitt des Leiterrohrs oder des Leiterdrahtes des Ringleiters. Zum Beispiel können ein erster Ringleiter und ein zweiter Ringleiter parallel geschaltet sein, wobei der erste Ringleiter einen größeren Umfang hat als der zweite Ringleiter. Zum Beispiel ist ein Abstand des ersten Ringleiters von der Düse größer als ein Abstand des zweiten Ringleiters von der Düse. In diesem Fall kann der Querschnitt des ersten Ringleiters gegenüber dem Querschnitt des zweiten Ringleiters vergrößert sein.

Die Induktionsspule kann wenigstens abschnittweise spiralförmig gewickelt sein, und zwar vorzugsweise durchgehend mit einer von Null verschiedenen Steigung in Bezug auf eine Richtung parallel zur Stabachse, wobei die Windungen in diesem Abschnitt auf dem Mantel eines Konus verlaufen, der symmetrisch zur Stabachse ist. Mit einer Ebene, die senkrecht auf der Stabachse steht, können die Wicklungen oder Windungen der Spule beispielsweise abschnittweise oder durchgehend einen Winkel von mehr als 5 Grad, von mehr als 10 Grad oder von mehr als 15 Grad aufweisen.

Zum Kühlen der Induktionsspule kann ein die Induktionsspule bildender Leiter zum Führen einer Kühlflüssigkeit als Hohlrohr ausgebildet sein. Ein Querschnitt des Hohlrohrs kann kreisförmig, oval oder viereckig sein. Das Hohlrohr kann als Doppelhohlrohr ausgebildet sein, das zwei getrennte Hohlkammern umfasst, z. B. für Hin- und Rückfluss.

Zum Schmelzen und Zerstäuben von elektrisch nicht leitfähige Materialien wie Keramiken kann als Variante der Beheizung zwischen dem Stab und der Spule ein einer Kontur des Stabes folgender, z. B. rotationssymmetrischer, und zur Düse hin offener Schirm angeordnet sein. Vorzugsweise ist der Schirm aus einem hochtemperaturbeständigen und induktiv ankoppelnden Material gebildet, z. B. aus Platin. Der Schirm wird normalerweise selbst induktiv erhitzt und gibt Wärme an den Stab mittels Wärmestrahlung ab.

Als Rückführung von unbrauchbarem Restpulver, Materialstaub und Spänen kann der Stab selbst als Tiegel ausgebildet sein. Dazu kann der Stab geeignete befüllbare Hohlräume besitzen. Ein solcher Hohlraum kann z. B. eine zylindrische Aussparung im Kern sein, in den das Restmaterial eingefüllt werden kann.

Pulver mit einer besonders schmalen Korngrößenverteilung können dadurch hergestellt werden, dass das Zerstäubungsgas parallel zur Fließrichtung des Schmelzestromes entlang einer vergleichsweise kurzen Beschleunigungsstrecke mit einer Länge L_{B} wenigstens auf die Schallgeschwindigkeit des Zerstäubungsgases beschleunigt wird. Zum Beispiel kann gelten: L_{B} ≤ 5·dₘᵢₙ, wobei dₘᵢₙ der bereits genannte kleinste Durchmesser der Zerstäubungsdüse senkrecht zur Düsenachse ist. Parallel zur Fließrichtung wird die Geschwindigkeit v des Zerstäubungsgases also beim Durchlaufen einer Strecke mit der Länge L_{B} um einen Betrag Δv geändert, wobei z. B. gilt: Δv ≥ 0.9·v₀, wobei v₀ die Schallgeschwindigkeit des Zerstäubungsgases bezeichnen soll.

Die hier vorgeschlagene Vorrichtung kann zusätzlich zu der zuvor beschriebenen Zerstäubungsdüse noch wenigstens eine weitere Düse aufweisen, die mit der Zerstäubungsdüse fluchtend angeordnet ist, so dass der Schmelzestrom auch durch die weitere Düse führbar ist oder geführt wird. Die weitere Düse kann derart ausgebildet sein, dass sie ein mit dem Schmelzestrom in die weitere Düse eingeführtes Gas in einer Richtung parallel zum Schmelzestrom wenigstens bis auf ein 0.5-faches der Schallgeschwindigkeit des in die weitere Düse eingeführten Gases beschleunigt, und zwar vorzugsweise laminar. Z. B. kann die weitere Düse einen in der Fließrichtung des Schmelzestromes monoton oder streng monoton sich verjüngenden Querschnitt aufweisen. Beispielsweise kann auch die weitere Düse als Lavaldüse ausgebildet sein. Die Abmessungen der weiteren Düse können von denen der Zerstäubungsdüse abweichen. Z. B. kann ein kleinster Querschnitt der weiteren Düse größer sein als der kleinste Querschnitt der Zerstäubungsdüse.

Vorzugsweise ist die weitere Düse zwischen dem Materialstab und der Zerstäubungsdüse angeordnet, also in Fließrichtung des Schmelzestromes vor der Zerstäubungsdüse. Sie kann dann insbesondere dazu dienen, das in die weitere Düse eingeführte Gas bereits vor dessen Eintritt in die Zerstäubungsdüse zu beschleunigen. Alternativ oder zusätzlich kann die weitere Düse den Schmelzestrom schon vor dessen Eintritt in die Zerstäubungsdüse zentrieren und/oder dehnen und beschleunigen. Es sind jedoch ebenfalls Anordnungen denkbar, bei denen die weitere Düse in Fließrichtung des Schmelzestromes hinter der Zerstäubungsdüse angeordnet ist.

Ausführungsbeispiele der Erfindung sind in den Zeichnungen dargestellt und werden anhand der nachfolgenden Beschreibung näher erläutert. Es zeigen:
- Fig. 1: schematisch eine Schnittdarstellung einer erfindungsgemäßen Vorrichtung zum Schmelzen eines Materials und zum Zerstäuben des Materials zu Pulver, wobei die Vorrichtung einen Materialstab, eine Induktionsspule und eine Zerstäubungsdüse umfasst;
- Fig. 2: schematisch eine vergrößerte Darstellung des Materialstabes, der Induktionsspule und der Zerstäubungsdüse aus Fig. 1;
- Fig. 3: schematisch eine erste spezielle Ausführungsform der in den Fign. 1 und 2 gezeigten Induktionsspule;
- Fig. 4: schematisch eine zweite spezielle Ausführungsform der der in den Fign. 1 und 2 gezeigten Induktionsspule;
- Fig. 5: schematisch eine dritte spezielle Ausführungsform der der in den Fign. 1 und 2 gezeigten Induktionsspule;
- Fig. 6: schematisch eine vierte spezielle Ausführungsform der der in den Fign. 1 und 2 gezeigten Induktionsspule;
- Fig. 7: schematisch eine Draufsicht auf die Ausführungsform der Induktionsspule gemäß Fig. 6;
- Fig. 8: schematisch eine spezielle Ausführungsform für induktiv nicht ankoppelnde Materialien wie z. B. Keramik; und
- Fig. 9: schematisch eine weitere Ausführungsform der vorgeschlagenen Vorrichtung, bei der eine weitere Düse mit der Zerstäubungsdüse fluchtend angeordnet ist.

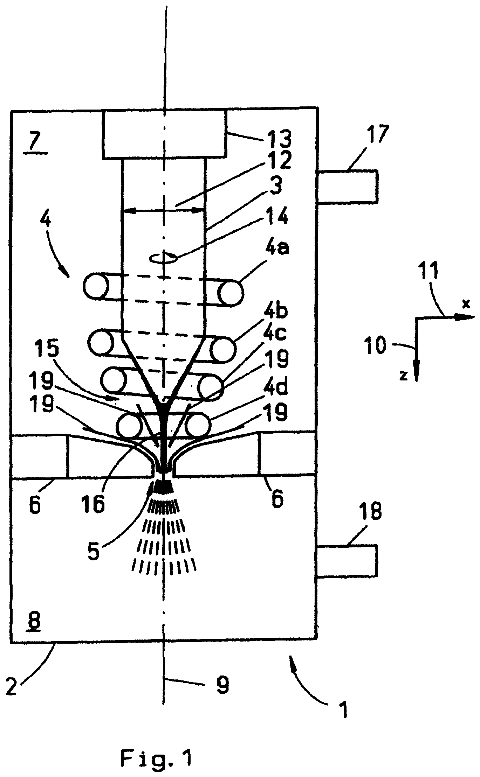

Fig. 1 zeigt schematisch eine Schnittdarstellung eines Ausführungsbeispiels einer erfindungsgemäßen Vorrichtung 1 zum tiegelfreien Schmelzen eines Materials, hier Titan, und zum Zerstäuben des Materials zu Pulver. Die Vorrichtung 1 umfasst einen Behälter 2, in dem ein Materialstab 3, eine Induktionsspule 4 und eine Zerstäubungsdüse 5 angeordnet sind. Der Stab 3, die Spule 4 und die Düse 5 sind jeweils zylindersymmetrisch oder annähernd zylindersymmetrisch und entlang einer vertikalen Achse 9 ausgerichtet. Eine Symmetrieachse des Stabes 3, eine Symmetrieachse der Spule 4 und eine Symmetrieachse der Düse 5 fallen jeweils mit der Achse 9 zusammen. Diese verläuft parallel zu einer z-Richtung 10, entlang derer die Schwerkraft wirkt. Senkrecht zur z-Richtung 10 verläuft eine x-Richtung oder laterale Richtung 11. Die Spule 4 und die Düse 5 sind als separate Bauteile ausgebildet. Die Spule 4 ist oberhalb der Düse 5 angeordnet und von dieser entlang der z-Richtung 10 beabstandet.

Der Materialstab 3 ist hier aus Titan gebildet und teilweise in die Spule 4 eingeführt. Eine Hebe-/Senkeinrichtung 13 ist eingerichtet, den Stab 3 zu halten und entlang der positiven und negativen z-Richtung 10 zu bewegen. Zudem kann die Hebe-/Senkeinrichtung 13 den Stab 3 mit einer Drehzahl von bis zu 200 min⁻¹ um die Stabachse drehen, wie durch den Pfeil 14 angedeutet. Die Spule 4 fasst den Stab 3 an dessen unterem, der Düse 5 zugewandten Ende ein und umschließt ihn. Ein senkrecht zur Stabachse bestimmter Querschnitt des Stabes hat z. B. einen Stabdurchmesser 12 von 40 mm. Im Bereich der Windungen 4a und 4b hat die Spule 4 einen etwas größeren Durchmesser als der Stab 3. Die Spule 4 ist hier aus Kupfer gebildet und weist eine Anzahl von Windungen 4a-d auf. In Richtung auf die Düse 5 werden die Windungen 4a-d wenigstens abschnittweise enger. Beispielsweise hat die erste Windung 4a am von der Düse 5 abgewandten Ende der Spule 4 einen größeren Windungsdurchmesser als die der Düse 5 zugewandte letzte Windung 4d.

Ein Innenraum des Behälters 2 ist durch eine Trennwand 6 in eine oberhalb der Trennwand 6 gelegene Hochdruckkammer 7 und eine unterhalb der Trennwand 6 gelegene Zerstäubungskammer 8 unterteilt, wobei die Hochdruckkammer 7 und die Zerstäubungskammer 8 über die Düse 5 in Fluidverbindung stehen. Die Spule 4 und der Materialstab 3 sind in der Hochdrucckammer 7 angeordnet. Ein erster Gasdruck p₁ in der Hochdruckkammer 7 und ein zweiter Gasdruck p₂ in der Zerstäubungskammer 8 sind über erste Druckregelmittel 17 und zweite Druckregelmittel 18 einstellbar. Die ersten Druckregelmittel umfassen z. B. einen Hochdruckgasspeicher mit Argon, eine Hochdruckleitung und ein Hochdruckventil, über das das Argongas in die Hochdruckkammer 7 einleitbar ist. Die zweiten Druckregelmittel 18 umfassen z. B. ein Abluftventil und eine Abluftleitung. Hier werden der erste Gasdruck p₁ auf 15 bar und der zweite Gasdruck p₂ auf ca. 1 bar geregelt, so dass ca. p₁/p₂ = 15 gilt.

Die Spule 4 wird von einer hier nicht gezeigten Wechselspannungsquelle mit einer Wechselspannung von ca. 100 kHz und mit einer elektrischen Leistung von ca. 20 kW betrieben. Die Spule induziert dadurch magnetische Wechselfelder im elektrisch leitenden Stab 3. Auf diese Weise wird der Stab 3 induktiv erhitzt, so dass er am unteren, der Düse 5 zugewandten Stabende 15 wenigstens an der Oberfläche geschmolzen wird. Dadurch entsteht ein Schmelzestrom 16, der in z-Richtung nach unten fließt.

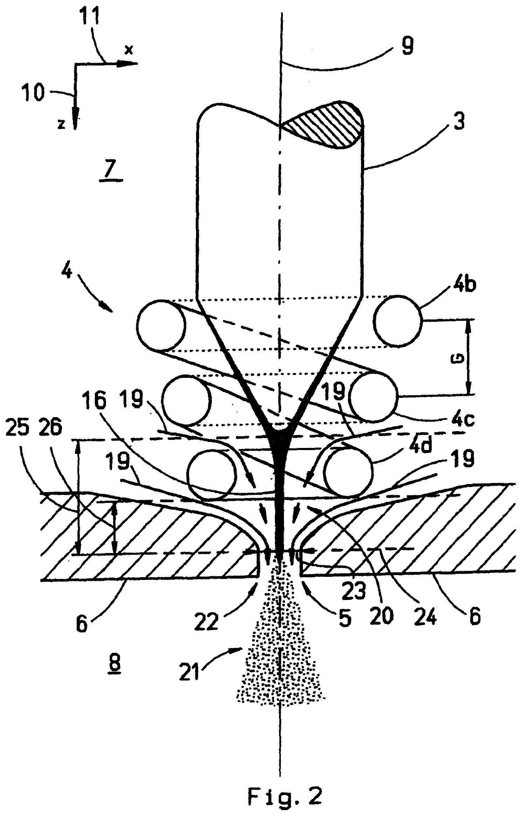

In Fig. 2 sind das der Düse 5 zugewandte Stabende 15 des Stabes 3, die Spule 4 und die Düse 5 in einer leicht vergrößerten Darstellung gezeigt. Hier und im Folgenden sind wiederkehrende Merkmale jeweils mit denselben Bezugszeichen versehen. Der durch das induktive Heizen des Stabes 3 erzeugte kontinuierliche Schmelzestrom 16 fließt in der z-Richtung 10 nach unten und wird durch eine der Spule 4 und dem Stab 3 zugewandte erste Öffnung 20 der Düse 5 in die Düse 5 eingeführt. Die Düse 5 ist als Lavaldüse ausgebildet. Die Form der Düse 5 bewirkt in Verbindung mit dem Druckunterschied zwischen dem ersten Gasdruck p₁ in der Hochdruckkammer 7 und dem zweiten Gasdruck p₂ in der Zerstäubungskammer 8 eine Beschleunigung des Zerstäubungsgases in der z-Richtung 10, hier hervorgehoben durch Pfeile 19. Hier wird Zerstäubungsgas 19 in der z-Richtung 10 beschleunigt und durch die erste Öffnung 20 in die Düse 5 eingeleitet. Da es insbesondere nicht erforderlich ist, dass Zerstäubungsgas 19 vorzuheizen, kann das hier vorgeschlagene Verfahren mit einem vergleichsweise geringen Energieaufwand durchgeführt werden. Die Düse 5 steht nur über die erste Öffnung 20 in Fluidverbindung mit der Hochdruckkammer 7. Das Zerstäubungsgas 19 wird also ausschließlich durch die erste Öffnung 20 in die Düse 5 eingeleitet.

Der Schmelzestrom 16 wird nun von der laminaren und laminar in der z-Richtung 10 beschleunigten Strömung des Zerstäubungsgases 19 erfasst und zentriert. Der Schmelzestrom 16 wird dann zusammen mit diesem sich beschleunigenden Gasstrom durch die erste Öffnung 20 in die Düse 5 geführt und durch die Düse 5 hindurchgeführt. Durch das schnellere Zerstäubungsgas 19 werden Schubspannungen auf die langsamer in z-Richtung 10 fließende Schmelze übertragen. Dieser Übertrag erfolgt analog einer umgekehrten Wandschubspannung bei einer laminaren Rohrströmung und verursacht in Fließrichtung einen Anstieg des Drucks im Innern des Schmelzestroms 16. In der immer schnelleren Strömung des Zerstäubungsgases 19 erfolgt dagegen, bedingt durch die Form der Lavaldüse 5, ein Druckabfall. Sobald der Innendruck des Schmelzestroms 16 zu groß wird, platzt der Schmelzestrom 16 auf und wird in Tröpfchen 21 zerstäubt. Der Schmelzestrom 16 bzw. die Tröpfchen 21 treten nun durch eine zweite Öffnung 22 der Düse 5 in die Zerstäubungskammer ein. Die zweite Öffnung 22 ist die einzige Fluidverbindung zwischen der Düse 5 und der Zerstäubungskammer 8.

Nach dem Abkühlen und Einfrieren der Tröpfchen entsteht so ein engverteiltes, sphärisches und sehr feines Pulver des geschmolzenen Materials. Im vorliegend beschriebenen Ausführungsbeispiel wird ein Titanpulver mit einem massebezogenen mittleren Korndurchmesser von 51 µm erzeugt. Für die Breite der Korndurchmesserverteilung des so erzeugten Titanpulvers gilt d₈₄/d₅₀ ≤ 2.6.

Ein zur Erzeugung eines qualitativ hochwertigen Pulvers wichtiger Parameter ist der minimale Düsenquerschnitt, charakterisiert durch den kleinsten Innendurchmesser dₘᵢₙ (Bezugszeichen 23) der Zerstäubungsdüse 5. Hier beträgt dₘᵢₙ = 6 mm. In Fig. 2 ist eine Ebene 24 senkrecht zur Düsenachse 9 hervorgehoben, in der eine Querschnittsfläche der Düse minimal ist und in der der Innendurchmesser der Düse 5 seinen kleinsten Wert dₘᵢₙ annimmt.

Um dem Erkalten oder Einfrieren des Schmelzestromes 16 vor dem Zerstäuben entgegenzuwirken, ist es vorteilhaft, den Stab 3 möglichst nah an die Düse 5 heranzuführen. Hier sind der Stab 3 und die Düse 5 derart angeordnet, dass ein kleinster Abstand 25 zwischen der Ebene 24 und dem Stab 3 in etwa nur das Dreifache von dₘᵢₙ beträgt, also ca. 18 mm.

Die dem Schmelzestrom 16 zur Zerstäubung zugeführte oder zuzuführende mechanische Energie wird bevorzugt mittels der Schubspannungen einer ursprünglich ruhenden oder im Wesentlichen ruhenden und erst zusammen mit dem Schmelzestrom 16 laminar beschleunigten Strömung des Zerstäubungsgases 19 in den Schmelzestrom 16 eingebracht. Die Düse 5 ist derart ausgebildet, dass die Strömung des Zerstäubungsgases 19 bis zum Zerstäuben des Schmelzestromes 16 laminar bleibt. Der Schmelzestrom 16 wird so bereits von der noch langsameren Strömung des Zerstäubungsgases 19 erfasst, beschleunigt, entlang der Fließrichtung gedehnt und verjüngt. Die zum Zerstäuben benötigte Energie kann bereits auf den Schmelzestrom 16 übertragen werden, bevor dieser durch die Düse 5 strömt.

Der bei der hier beschriebenen Vorrichtung vergleichsweise geringe kürzeste Abstand 25 zwischen dem Stab 3 und der Ebene 24 des engsten Düsenquerschnitts bewirkt somit zudem, dass das Zerstäubungsgas parallel zur Fließrichtung des Schmelzestromes 16 entlang einer Beschleunigungsstrecke, die kürzer ist als der Abstand 25 zwischen dem Stab 3 und der Ebene 24, wenigstens bis auf die Schallgeschwindigkeit des Zerstäubungsgases 19 beschleunigt wird. Die Länge der Beschleunigungsstrecke beträgt hier also insbesondere weniger als das Dreifache von dₘᵢₙ. Das Zerstäubungsgas 19 erreicht die Schallgeschwindigkeit, wenn es die Ebene 24 des engsten Düsenquerschnitts passiert. Eine weitere effektive Maßnahme, mit der das Erkalten oder Einfrieren des Schmelzestromes 16 vor dem Zerstäuben verhindert wird, besteht darin, die Spule 4 möglichst nah an die Düse heranzuführen, so dass der Schmelzestrom 16 vor dem Eintritt in die Düse 5 möglichst noch innerhalb der Spule 4 strömt und wenigstens von der letzten Windung 4d der Spule 4 umschlossen oder eingefasst wird. Im hier gezeigten Beispiel beträgt der kleinste Abstand aₘᵢₙ (Bezugszeichen 26) zwischen dem der Düse 5 zugewandten Ende der Spule 4 und der Ebene 24 des engsten Düsenquerschnitts weniger als das Doppelte von dₘᵢₙ, also weniger als ca. 12 mm.

Der Stab 3, die Spule 4 und die Düse 5 sind, wie in Fig. 2 gezeigt, derart angeordnet, dass der Schmelzestrom 16 in einem Bereich zwischen dem der Düse 5 zugewandten Ende des Stabs 3 und der Düse 5 oder zwischen dem der Düse 5 zugewandten Ende des Stabs 3 und der Ebene 24 des engsten Düsenquerschnitts weiter wenigstens von der letzten Windung 4d der Spule 4 geheizt wird. Daher ist wenigstens die letzte Windung 4d entlang der Fließrichtung des Schmelzestromes 16 zwischen dem der Düse 5 zugewandten Ende des Stabes und der Düse 5 angeordnet. Der Windungsdurchmesser der letzten Windung 4d ist hier kleiner als 5·dₘᵢₙ. Um gleichzeitig zu verhindern, dass die Düse 5 durch die nah an die Düse 5 herangeführte Spule 4 aufgeheizt wird, ist die Düse 5 vorwiegend aus einem Material gebildet, dessen spezifischer elektrischer Widerstand z. B. größer ist als 2·10⁻² Ωm. Das Schmelzen des Stabes 3 an seinem der Düse 5 zugewandten Ende erfolgt bei der in Fig. 2 gezeigten Anordnung besonders effizient, weil die Windungen 4b-d jeweils abschnittweise senkrecht zur Stabachse 9 ausgerichtet sind. Die jeweils senkrecht zur Stabachse 9 ausgerichteten Abschnitte benachbarter Windungen sind durch schräge Abschnitte verbunden, die jeweils eine konstante Ganghöhe G überwinden.

Damit das induktive Heizen des Strahls auf besonders effektive Weise geschehen kann, ist es wichtig, dass eine Schmelzrate (Masse pro Zeit), mit der der Stab 3 geschmolzen wird, groß genug ist, um einen kontinuierlichen Schmelzestrom 16 zu erzeugen. Die Schmelzrate sollte z. B. wenigsten 0.5 kg pro Minute oder wenigstens 1 kg pro Minute betragen. Die zum Erzeugen eines kontinuierlichen Schmelzestroms 16 erforderliche Schmelzrate ist natürlich abhängig von den speziellen Eigenschaften des geschmolzenen Materials und kann von Material zu Material variieren (z. B. Viskosität, Oberflächenspannung).

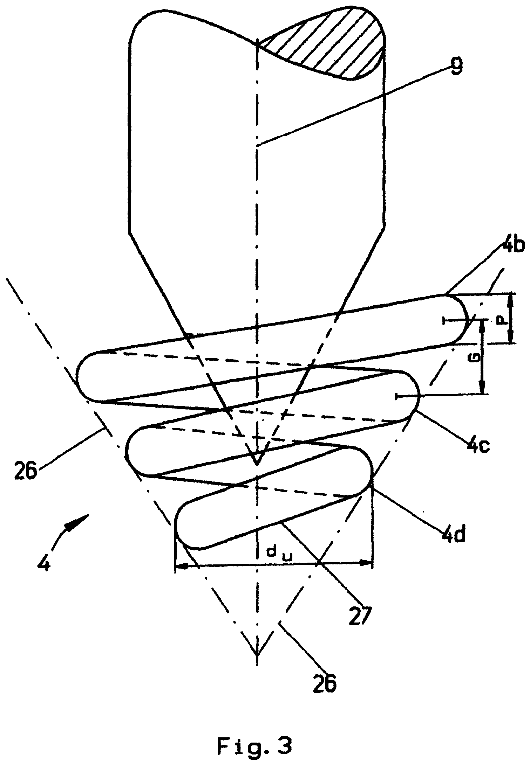

In den Fign. 3 bis 7 sind schematisch spezielle Ausführungsformen der Spule 4 gezeigt.

Fig. 3 zeigt eine Ausführungsform der Spule 4, bei der die Windungen 4b-d spiralförmig gewickelt sind und auf dem Mantel 26 eines gedachten Konus verlaufen, der symmetrisch bezüglich der Stabachse 9 ist. Bei einem vollständigen Umlauf um 360 Grad überwindet jede Windung dabei eine Ganghöhe G. Ein Durchmesser eines die Spule 4 bildenden Leiters oder Leitungsrohres 27 ist mit P bezeichnet. Normalerweise ist G etwas größer als P. Zum Beispiel kann gelten G ≥ 1.5·P. Der Leiter 27 ist zum Kühlen mittels einer Kühlflüssigkeit als Hohlrohr aus Kupfer ausgebildet. Der Außendurchmesser P dieses Hohlrohres kann z. B. 12 mm betragen. Eine Wandstärke des Rohres kann 2 mm sein.

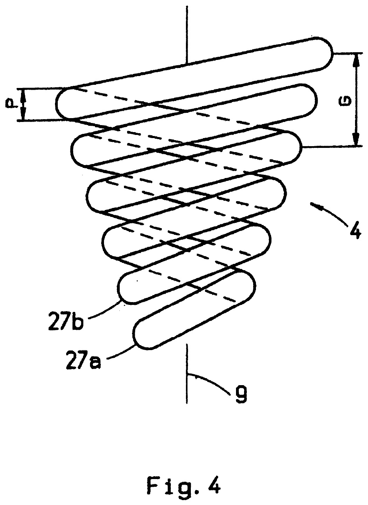

Die Ausführungsform der Spule 4 gemäß Fig. 4 unterscheidet sich von der gemäß Fig. 3 dadurch, dass die Spule 4 hier zwei elektrisch parallel geschaltete Leitungsrohre 27a und 27b umfasst, die sind wiederum jeweils spiralförmig gewickelt sind und zum unteren Ende hin konisch enger werdend. Die Hohlrohre 27a und 27b sind ebenfalls aus Kupfer gebildet. Ihr Außendurchmesser P soll hier jedoch nur 6 mm betragen. Die Wandstärke ist nur 1 mm. Die Leitungsrohre 27a und 27b lassen sich damit deutlich leichter eng wickeln als das Leitungsrohr 27 gemäß Fig. 3. Die Ganghöhe G der Leiter 27a und 27b ist hier z. B. jeweils auch 18 mm aber der unterste Durchmesser, dᵤ ist deutlich kleiner.

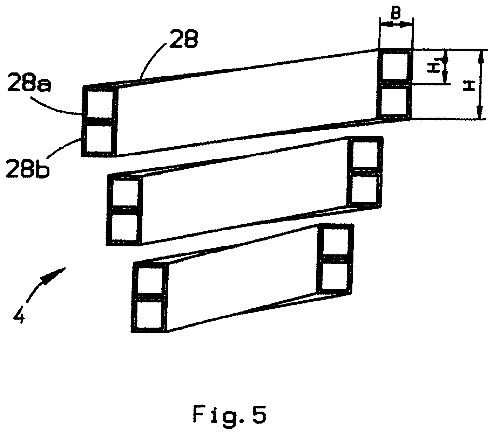

Bei der in Fig. 5 gezeigten Ausführungsform der Spule 4 umfasst diese einen Leiter 28 der als Doppelhohlrohr mit einem rechteckigen Querschnitt ausgebildet ist. Eine Höhe des Querschnitts des Leiters 28 ist mit H bezeichnet, eine Breite mit B. Das Doppelhohlrohr umfasst zwei aneinander gefügte einzelne Hohlrohre 28a und 28b, deren Hohlräume getrennt sind, also nicht in Fluidverbindung stehen. Die Hohlrohre 28a und 28b haben jeweils einen quadratischen Querschnitt mit einer Seitenlänge Hᵢ, wobei H=2·Hᵢ.

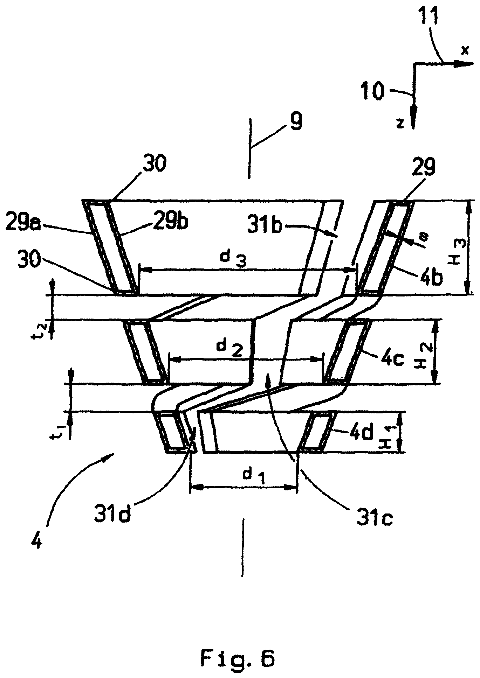

Fig. 6 zeigt eine weitere Ausführungsform der Spule 4, bei der die Windungen 4b-d jeweils als in etwa hufeisenförmige Manschetten ausgebildet sind, von denen jede senkrecht zur Spulenachse 9 ausgerichtet ist. Die Spule 4 gemäß Fig. 6 erzeugt somit Felder mit besonders hoher Symmetrie bezüglich der Spulenachse 9. Der Materialstab 3 kann so besonders gleichmäßig geschmolzen werden.

Jede dieser Manschetten bildet einen an einer Stelle elektrisch unterbrochenen Ringleiter, der nahezu geschlossen ist, die Achse 9 also z. B. jeweils um bis zu 340 Grad umschließt. Die elektrischen Unterbrechungen sind als Luftspalte 31b-d ausgebildet.

Die Windungen 4a-d sind elektrisch parallel geschaltet und jeweils als Hohlrohr zum Führen einer Kühlflüssigkeit ausgebildet. Die die Windungen 4a-d bildenden Hohlrohre sind jeweils aus zwei komplementären im Querschnitt L-förmigen Stücken zusammengesetzt. Ein Querschnitt eines jeden Hohlrohrs hat daher die Form eines Parallelogramms. Zum Beispiel ist das die Windung 4b bildende Hohlrohr 29 aus den Stücken 29a und 29b zusammengesetzt, die durch Lötverbindungen 30 verbunden sind. Die Außen- und Innenflächen der Stücke 29a und 29b bilden wiederum Konusausschnitte. Die Innendurchmesser d₁, d₂ und d₃ nehmen in der z-Richtung 10 ab. Entlang der z-Richtung 10 bestimmte Abstände t₁ und t₂ zwischen den Windungen sind gleich groß.

Die Windungen 4b-d sind jeweils aus demselben Leitungsmaterial gefertigt und haben jeweils einen Unterschiedlichen Umfang. Zum möglichst gleichmäßigen Schmelzen des Stabes an seinem unteren Ende können die in den einzelnen parallel geschalteten Windungen 4b-d fließenden Ströme dadurch angepasst werden, dass den Windungen 4b-d jeweils unterschiedliche Querschnitte verliehen werden. Hier ist gezeigt, dass die Höhen H₁, H₂ und H₃ der Windungen 4b-d jeweils unterschiedlich sind. Insbesondere nehmen die Höhen H₁, H₂ und H₃ z. B. linear mit den Durchmessern d₁, d₂ und d₃ von unten nach oben zu. Damit kann erreicht werden, dass in den parallel geschalteten Windungen jeweils annähernd gleiche Ströme fließen, so dass der Stab 3 an seiner Oberfläche am unteren Ende möglichst gleichmäßig geschmolzen wird.

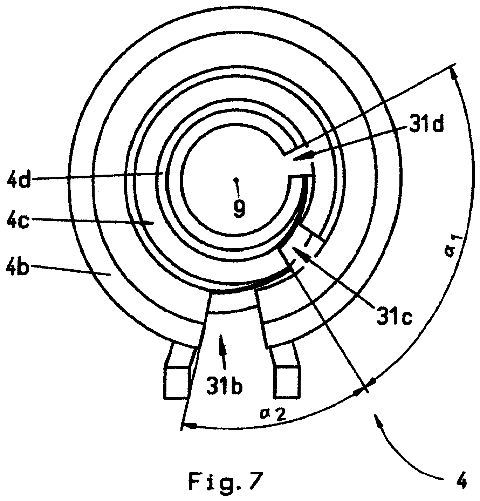

Zusätzlich sind die Luftspalte 31b-d der verschiedenen Windungen 4b-d gegeneinander um Winkel α₁ und α₂ rotiert, wie Fig. 7 zu entnehmen ist.

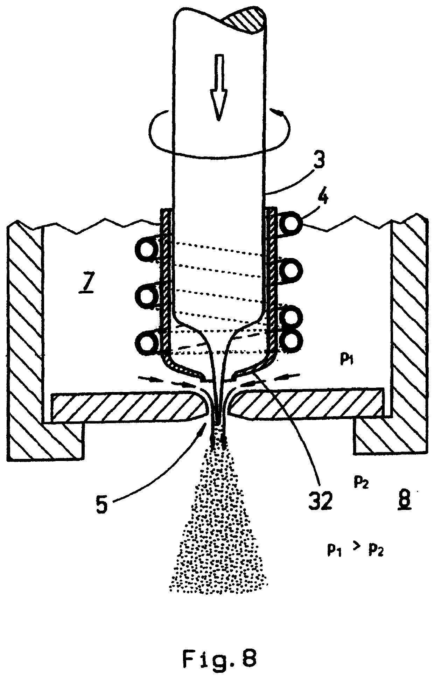

Fig. 8 zeigt eine Ausführungsform der Vorrichtung 1, mit der insbesondere nicht induktiv ankoppelnde Materialien geschmolzen werden können, z. B. Keramik. Zum Beheizen des Stabes 3 durch die Spule 4 ist ein einer Kontur des Stabes folgender, z. B. rotationssymmetrischer, und zur Düse hin offener Schirm 32 angeordnet. Der Schirm 32 ist aus einem hochtemperaturbeständigen und induktiv ankoppelnden Material gebildet, z. B. aus Platin. Der Schirm 32 wird normalerweise selbst induktiv erhitzt und gibt Wärme an den Stab mittels Wärmestrahlung ab.

### Versuchsergebnisse:

In einem ersten Versuch mit einem abzuschmelzenden Stab aus Aluminium mit Durchmesser d = 50 mm wurde bei einer Drehzahl des Stabes mit etwa 40 min⁻¹ eine Leistung von rund 14 kW von einem Hochfrequenzumformer übertragen, dessen Magnetfeld nach der Einkoppelung mit etwa 105 kHz angeregt war. Bei einer Düse aus einem sehr guten Leiter wurde ein tropfender und noch nicht kontinuierlicher Schmelzestrom bei einem Verdüsungsdruck (Gasdruck in der Hochdruckkammer) von 10 bar erzeugt, wobei die Lage des Abschmelzbereiches aufgrund der niedrigen Schmelztemperatur von Aluminium nicht sehr leicht zu erkennen war.

Bei einem anderen Versuch mit einem 50 mm-Stab aus Edelstahl 1.4462 wurden 16 kW bei 101 kHz übertragen. Die Drehzahl betrug wieder etwa 40 min⁻¹ und die Düse war aus einem guten Leiter. Bei einem ersten Gasdruck von 10 bar konnte für kurze Zeit ein durchgehender Schmelzestrom erzeugt werden und ansonsten nur ein abtropfender Materialabfluß.

Bei einem weiteren Versuch mit einem 38 mm-Stab aus Edelstahl 1.4462 wurden sehr unterschiedliche Leistungen im Bereich von ca. 25-35 kW bei 107 kHz übertragen. Die Drehzahl betrug wieder etwa 40 min⁻¹ und die Düse war dieses Mal aus einem Nichtleiter, so dass eine besonders geringe Distanz zwischen Spule und Lavaldüse eingestellt werden konnte. Zudem wurde hier die erwähnte Zweistufendüse eingesetzt. Bei einem Verdüsungsdruck von 20 bar konnte ein durchgängiger Schmelzestrom erzeugt werden. Die mittlere Korngröße des betrug hierbei d₅₀ = 49 µm und d₈₄ / d₅₀ war gleich 2,68.

Beim Verdüsen von Titanstäben mit 20 mm Durchmesser wurden bei einem Verdüsungsdruck von 17-19 bar gegen Atmosphäre mit einer Lavaldüse aus einem Nichtleiter mit Zweistufenkontur eine Leistung von etwa 35 kW bei einer Frequenz von 112 kHz übertragen. Die Drehzahl war gleich wie oben. Es ergab sich eine mittlere Korngröße von d₅₀ = 51,4 µm bei d₈₄ / d₅₀ = 2,60 und in einem Teilstrom von 23,7 µm bei d₈₄ / d₅₀ = 1,78.

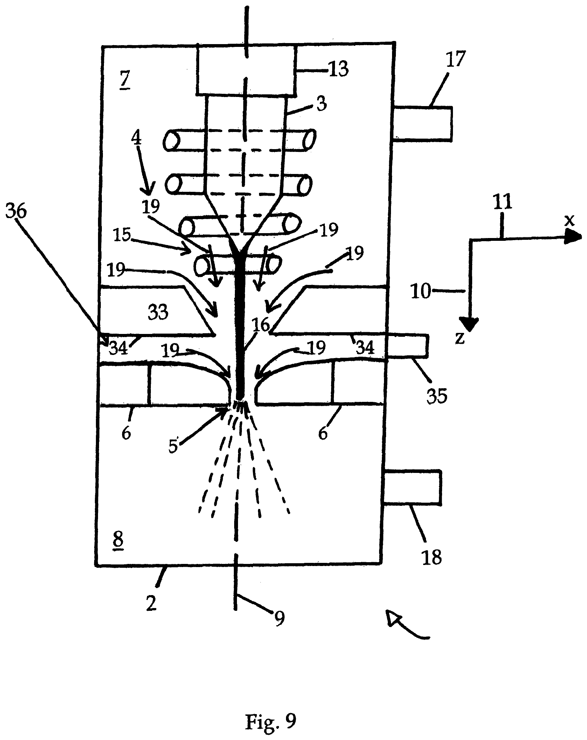

Fig. 9 zeigt eine abgewandelte Ausführungsform der Vorrichtung 1 aus Fig. 1. Zuvor und insbesondere im Zusammenhang mit der Fig. 1 bereits beschriebene Merkmale sind weiterhin mit denselben Bezugszeichen bezeichnet. Die Vorrichtung 1 gemäß Fig. 9 unterscheidet sich von der Vorrichtung 1 gemäß Fig. 1 dadurch, dass entlang der z-Richtung 10 zwischen der Trennwand 6 und dem Materialstab 3 eine weitere Trennwand 34 angeordnet ist. Eine Durchgangsöffnung in der weiteren Trennwand 34 bildet eine weitere Düse 33. Ein Querschnitt der weiteren Düse 33 verjüngt sich in der positiven z-Richtung 10 und damit in Fließrichtung des Schmelzestromes 16 in der Form eines Konus. Eine Düsenachse der weiteren Düse 33 fällt mit der Achse 9 zusammen, so dass die Zerstäubungsdüse 5 und die weitere Düse 33 fluchtend angeordnet sind.

Der am Stabende 15 entstehende Schmelzestrom 16 wird also zunächst in die weitere Düse 33 eingeführt. Diese ist derart ausgebildet, dass sie das an der dem Materialstab 3 zugewandten Eintrittsöffnung der weiteren Düse 33 in die weitere Düse eintretende Zerstäubungsgas 19 parallel zur Fließrichtung des Schmelzestromes 16, also entlang der positiven z-Richtung 10, wenigstens auf das 0.5-fache der Schallgeschwindigkeit des Zerstäubungsgases 19 beschleunigt. Der Schmelzestrom 16 wird so bereits vor dem Eintreten in die Zerstäubungsdüse 5 zentriert und gedehnt. Es hat sich gezeigt, dass dies die Qualität des in der Zerstäubungsdüse 5 erzeugten Pulvers sowohl in Bezug auf die erzielte Korngröße und als auch in Bezug auf die erzielte Korngrößenverteilungsbreite noch weiter verbessern kann. In Fig. 9 beträgt eine Fläche des senkrecht zur Düsenachse 9 bestimmten kleinsten Querschnitts der weiteren Düse 33 wenigstens das 5-fache der Fläche des kleinsten Querschnitts der Zerstäubungsdüse 5. Es sind jedoch auch hiervon abweichende Gestaltungen der weiteren Düse 33 denkbar.

Damit die weitere Düse 33 das Zerstäubungsgas 19 wie zuvor beschrieben (vor)beschleunigt, bedarf es beiderseits der Trennwand 34 eines geeigneten Druckunterschiedes. Dieser wird durch die zuvor beschriebenen ersten Druckregelmittel 17 und durch dritte Druckregelmittel 35 erzeugt. Die dritten Druckregelmittel umfassen wie die ersten Druckregelmittel 17 eine Hochdruckleitung und ein Druckregelventil, die an einen Hochdruckgasspeicher mit Argon angeschlossen sind und über die Argongas in einen Zwischenraum 36 zwischen den Trennwänden 6 und 34 einleitbar ist. Beispielsweise können die Druckregelmittel 17, 18 und 35 derart eingestellt werden, dass der Gasdruck p₃ im Zwischenraum 36 in etwa p₃=(p₁+p₂)/2 beträgt, wobei p₁ und p₂ wie zuvor beschrieben den Gasdruck in der Hochdruckkammer 7 und in der Zerstäubungskammer 8 bezeichnen. In jedem Fall sind die Druckregelmittel 17, 18, 35 so einzustellen, dass gilt: p₂<p₃<p₁.

## Patentansprüche

1. Vorrichtung (1) zum tiegelfreien Schmelzen eines Materials und zum Zerstäuben des geschmolzenen Materials zum Herstellen von Pulver, umfassend:
eine Zerstäubungsdüse (5), die als Lavaldüse ausgebildet ist und eine Düsenachse (9) definiert;
eine Induktionsspule (4) mit Windungen (4a-d), die in Richtung auf die Zerstäubungsdüse (5) wenigstens abschnittweise enger werden; und
einen wenigstens teilweise in die Induktionsspule (4) eingeführten Materialstab (3);
wobei die Induktionsspule (4) eingerichtet ist, das Material des Materialstabes (3) zum Erzeugen eines Schmelzestromes (16) zu schmelzen; und
wobei die Induktionsspule (4) und die Zerstäubungsdüse (5) derart angeordnet sind, dass der Schmelzestrom (16) zum Zerstäuben des Schmelzestromes (16) mittels eines Zerstäubungsgases (19), das in die Zerstäubungsdüse (5) einleitbar ist, durch eine erste Öffnung (20) der Zerstäubungsdüse (5) in die Zerstäubungsdüse (5) einführbar ist oder eingeführt wird;
**dadurch gekennzeichnet,**
**dass** die Zerstäubungsdüse (5) derart ausgebildet ist, dass das Zerstäubungsgas (19) nur durch die genannte erste Öffnung (20) der Zerstäubungsdüse (5) in die Zerstäubungsdüse (5) einleitbar ist oder eingeleitet wird;
wobei die Zerstäubungsdüse (5) eingerichtet ist, das Zerstäubungsgas (19) in einer Richtung parallel zum Schmelzestrom (16) laminar wenigstens bis auf die Schallgeschwindigkeit des Zerstäubungsgases (19) zu beschleunigen;
wobei die Induktionsspule (4) und die Zerstäubungsdüse (5) als separate Bauteile ausgebildet sind und die Induktionsspule (4) entlang der Düsenachse (9) von der Zerstäubungsdüse (5) beabstandet ist;
wobei die Induktionsspule (4) und die Zerstäubungsdüse (5) derart angeordnet sind, dass aₘᵢₙ < 4·dₘᵢₙ, wobei aₘᵢₙ der kleinste Abstand zwischen der Induktionsspule (4) und einer Ebene (24) ist, die durch die senkrecht zur Düsenachse (9) der Zerstäubungsdüse (5) bestimmte minimale Querschnittsfläche der Zerstäubungsdüse (5) gegeben ist, und wobei dₘᵢₙ ein kleinster Innendurchmesser der Zerstäubungsdüse (5) in der genannten Ebene (24) ist; und
wobei der Materialstab (3), die Induktionsspule (4) und die Zerstäubungsdüse (5) derart angeordnet sind, dass entlang der Düsenachse wenigstens eine Windung der Induktionsspule (4) zwischen der Zerstäubungsdüse (5) und einem der Zerstäubungsdüse (5) zugewandten Ende des Materialstabs (3) angeordnet ist, so dass der Schmelzestrom (16) vor dem Eintreten des Schmelzestromes (16) in die Zerstäubungsdüse (5) durch die Induktionsspule (4) induktiv heizbar ist oder geheizt wird.

2. Vorrichtung (1) nach Anspruch 1, **dadurch gekennzeichnet, dass** das Material, aus dem der Materialstab (3) gebildet ist, Metall oder Keramik umfasst, wobei das Metall vorzugsweise Aluminium, Eisen oder Titan enthält.

3. Vorrichtung (1) nach einem der vorhergehenden Ansprüche, **dadurch gekennzeichnet, dass** ein kleinster Innendurchmesser dₘᵢₙ (23) der Zerstäubungsdüse (5) kleiner ist als 7 mm.

4. Vorrichtung (1) nach einem der vorhergehenden Ansprüche, **dadurch gekennzeichnet, dass** der Materialstab (3) und die Zerstäubungsdüse (5) derart angeordnet sind, dass für einen kleinsten Abstand L (25) zwischen dem Materialstab (3) und der genannten Ebene (24) gilt: L ≤ 5·dₘᵢₙ.

5. Vorrichtung (1) nach einem der vorhergehenden Ansprüche, **dadurch gekennzeichnet, dass** gilt: aₘᵢₙ ≤ 3·dₘᵢₙ.

6. Vorrichtung (1) nach einem der vorhergehenden Ansprüche, **dadurch gekennzeichnet, dass** die Zerstäubungsdüse (5) zur Minimierung einer durch die Tätigkeit der Induktionsspule (4) in der Zerstäubungsdüse (5) dissipierten Wärmemenge aus einem Düsenmaterial gebildet ist, für dessen spezifischen elektrischen Widerstand ρ gilt: ρ ≤ 0.02·10⁻⁶ Ωm oder ρ ≥ 10⁻² Ωm.

7. Vorrichtung (1) nach einem der vorhergehenden Ansprüche, **gekennzeichnet durch** eine Hochdruckkammer (7), eine mit der Hochdruckkammer (7) über die Zerstäubungsdüse (5) in Fluidverbindung stehende Zerstäubungskammer (8), erste Druckregelmittel (17) zum Einleiten des Zerstäubungsgases (19) in die Hochdruckkammer (7) und zum Regeln eines ersten Gasdrucks p₁ in der Hochdruckkammer (7) sowie zweite Druckregelmittel (18) zum Regeln eines zweiten Gasdrucks p₂ in der Zerstäubungskammer (8), wo bei die ersten und die zweiten Druckregelmittel eingerichtet sind, die Drücke p₁ und p₂ zum Beschleunigen des Zerstäubungsgases (19) in einer Richtung parallel zur Flussrichtung des Schmelzestromes (16) derart einzustellen, dass gilt: p₁/p₂ > 1.8 und p₁ > 10 bar.

8. Vorrichtung (1) nach einem der vorhergehenden Ansprüche, **dadurch gekennzeichnet, dass** wenigstens eine der Windungen (4a-d) der Induktionsspule (4), die im Bereich eines der Zerstäubungsdüse (5) zugewandten Endes (15) des Materialstabes (3) angeordnet ist, und zwar vorzugsweise wenigstens die der Zerstäubungsdüse (5) zugewandte letzte Windung (4d) der Induktionsspule (4), zum Erzeugen eines in diesem Bereich in Bezug auf eine Stabachse des Materialstabes (3) möglichst symmetrischen elektromagnetischen Feldes wenigstens abschnittweise senkrecht zur Stabachse verläuft.

9. Vorrichtung (1) nach Anspruch 8, **dadurch gekennzeichnet, dass** die wenigstens eine Windung (4d) als an einer Stelle elektrisch unterbrochener Ringleiter ausgebildet ist, vorzugsweise als nahezu geschlossener Ringleiter.

10. Vorrichtung (1) nach Anspruch 9, **gekennzeichnet durch** wenigstens zwei dieser Ringleiter, wobei die wenigstens zwei Ringleiter elektrisch parallel geschaltet sind.

11. Vorrichtung (1) nach Anspruch 10, **dadurch gekennzeichnet, dass** Ringleiter mit unterschiedlichem Umfang verschieden ausgebildete Querschnitte haben und/oder entlang der Spulenachse unterschiedliche Abstände voneinander haben, so dass sie jeweils einen annähernd gleichen elektrischen Widerstand haben und entlang der Stabachse eine möglichst homogene Feldverteilung erzeugen.

12. Vorrichtung (1) nach einem der vorhergehenden Ansprüche, **dadurch gekennzeichnet, dass** ein die Induktionsspule (4) bildender Leiter zum Führen einer Kühlflüssigkeit als Hohlrohr ausgebildet ist.

13. Vorrichtung (1) nach einem der vorhergehenden Ansprüche, **gekennzeichnet durch** wenigstens eine weitere Düse (33), die mit der Zerstäubungsdüse (5) fluchtend angeordnet ist und die vorzugsweise zwischen dem Materialstab (3) und der Zerstäubungsdüse (5) angeordnet ist, so dass der Schmelzestrom (16) auch durch die weitere Düse (33) führbar ist oder geführt wird, wobei die weitere Düse (33) eingerichtet ist, ein mit dem Schmelzestrom (16) in die weitere Düse (33) eingeführtes Gas in einer Richtung parallel zum Schmelzestrom (16) wenigstens bis auf ein 0.5-faches der Schallgeschwindigkeit des in die weitere Düse (33) eingeführten Gases zu beschleunigen.

14. Verfahren zum Herstellen von Pulver durch tiegelfreies Schmelzen eines Materials und durch Zerstäuben des geschmolzenen Materials mittels der Vorrichtung nach einem der vorhergehenden Ansprüche, umfassend die Schritte:
wenigstens teilweises Einführen eines Materialstabes (3) in eine wenigstens abschnittweise konisch sich verjüngende Induktionsspule (4);
Beaufschlagen der Induktionsspule (4) mit einer Wechselspannung zum Schmelzen des Materialstabes (3) und zum Erzeugen eines Schmelzestromes (16);
Einführen des Schmelzestromes (16) in eine Zerstäubungsdüse (5) durch eine erste Öffnung (20) der Zerstäubungsdüse (5); und
Einleiten eines Zerstäubungsgases (19) in die Zerstäubungsdüse (5) und Zerstäuben des Schmelzestromes (16) mittels des Zerstäubungsgases (19);
wobei das Zerstäubungsgas (19) nur durch die erste Öffnung (20) der Zerstäubungsdüse (5) in die Zerstäubungsdüse (5) eingeleitet wird;
wobei das durch die erste Öffnung (20) in die Zerstäubungsdüse (5) einzuleitende und/oder eingeleitete Zerstäubungsgas (19) in einer Richtung parallel zu einer Fließrichtung des Schmelzestromes (16) laminar wenigstens bis auf die Schallgeschwindigkeit des Zerstäubungsgases (19) beschleunigt wird, so dass der Schmelzestrom (16) sich aufteilt oder sogar zerplatzt und Pulver mit einer Korngröße im Mikrometerbereich und/oder im Submikrometerbereich erzeugt wird; und
wobei der Schmelzestrom (16) vor dem Eintreten des Schmelzestroms (16) in die Zerstäubungsdüse (5) durch die Induktionsspule (4) induktiv geheizt wird.

15. Verfahren nach Anspruch 14, wobei das Zerstäubungsgas (19) parallel zur Fließrichtung des Schmelzestromes (16) entlang einer Beschleunigungsstrecke mit einer Länge LB wenigstens bis auf die Schallgeschwindigkeit des Zerstäubungsgases (19) beschleunigt wird, wobei für L_{B} gilt: L_{B} < 5·dₘᵢₙ, wobei dₘᵢₙ (23) der kleinste Durchmesser der Zerstäubungsdüse (5) senkrecht zur Düsenachse ist.

## Claims

1. A device (1) for the crucible-free melting of a material and for atomising the melted material for manufacturing powder, comprising
an atomisation nozzle (5) configured as a Laval nozzle and defining a nozzle axis (9);
an induction coil (4) with windings (4a-d) which at least in sections become narrower in the direction towards the atomisation nozzle (5); and
a material rod (3) which is introduced at least partly into the induction coil (4);
wherein the induction coil (4) is configured to melt the material of the material rod (3) for producing a melt flow (16); and
wherein the induction coil (4) and the atomisation nozzle (5) are arranged in a manner such that the melt flow (16) can be introduced or is introduced into the atomisation nozzle (5) through a first opening (20) of the atomisation nozzle (5), for the atomisation of the melt flow (16) by way of an atomisation gas (19) which can be introduced into the atomisation nozzle (5),
**characterised in that**
the atomisation nozzle (5) is designed in a manner such that the atomisation gas (19) can only be introduced or is only introduced into the atomisation nozzle (5) through the mentioned first opening (20) of the atomisation nozzle (5);
wherein the atomisation nozzle (5) is configured to laminarly accelerate the atomisation gas (19) in a direction parallel to the melt flow (16), at least up to the speed of sound of the atomisation gas (19);
wherein the induction coil (4) and the atomisation nozzle (5) are designed as separate components and the induction coil (4) is spaced apart from the atomisation nozzle (5) along the nozzle axis (9);
wherein the induction coil (4) and the atomisation nozzle (5) are arranged in a manner such that aₘᵢₙ < 4·dₘᵢₙ, wherein aₘᵢₙ is the smallest distance between the induction coil (4) and a plane (24) given by the minimal cross-sectional area of the atomisation nozzle (5) which is determined perpendicularly to the nozzle axis (9) of the atomisation nozzle (5), and wherein dₘᵢₙ is the smallest inner diameter of the atomisation nozzle (5) in the already mentioned plane (24); and
wherein the material rod (3), the induction coil (4) and the atomisation nozzle (5) are arranged in such a manner that, along the nozzle axis, at least one winding of the induction coil (4) is arranged between the atomisation nozzle (5) and an end of the material rod (3) facing the atomisation nozzle (5), so that the melt flow (16) is inductively heatable or heated by the induction coil (4), before entry of the melt flow (16) into the atomisation nozzle (5).

2. A device (1) according to claim 1, **characterised in that** the material, from which the material rod (3) is formed, comprises metal or ceramic, wherein the metal preferably contains aluminium, iron or titanium.

3. A device (1) according to one of the preceding claims, **characterised in that** a smallest inner diameter dₘᵢₙ (23) of the atomisation nozzle (5) is smaller than 7 mm.

4. A device (1) according to one of the preceding claims, **characterised in that** the material rod (3) and the atomisation nozzle (5) are arranged in a manner such that for a smallest distance L (25) between the material rod (3) and the mentioned plane (24), the following applies: L ≤ 5·dₘᵢₙ.

5. A device (1) according to one of the preceding claims, **characterised in that** the following applies: aₘᵢₙ ≤ 3·dₘᵢₙ.

6. A device (1) according to one of the preceding claims, **characterised in that** the atomisation nozzle (5), for the minimisation of a heat quantity dissipated by the activity of the induction coil (4) in the atomisation nozzle (5), is formed from a nozzle material, for whose specific electrical resistance ρ, the following applies: ρ ≤ 0.02·10-6 Ωm or ρ > 10-2 Ωm.

7. A device (1) according to one of the preceding claims, **characterised by** a high-pressure chamber (7), an atomisation chamber (8) which is in fluid connection with the high-pressure chamber (7) via the atomisation nozzle (5), first pressure control means (17) for introducing the atomisation gas (19) into the high-pressure chamber (7) and for the control of a first gas pressure p₁ in the high-pressure chamber (7), as well as second pressure control means (18) for the control of a second gas pressure p₂ in the atomisation chamber (8), wherein the first and the second pressure control means are configured to set the pressures p₁ and p₂ for accelerating the atomisation gas (19) in a direction parallel to the flow direction of the melt flow (16), in a manner such that: p₁/p₂ > 1.8 and p₁ > 10 bar.

8. A device (1) according to one of the preceding claims, **characterised in that** at least one of the windings (4a-d) of the induction coil (4) which is arranged in the region of an end (15) of the material rod (3) which faces the atomisation nozzle (5), and specifically preferably at least the last winding (4d) of the induction coil (4) which faces the atomisation nozzle (5), at least in sections runs perpendicularly to the rod axis, for producing an electromagnetic field which with respect to the rod axis of the material rod (3) is as symmetrical as possible in this region.

9. A device (1) according to claim 8, **characterised in that** the at least one winding (4d) is designed as a ring conductor which is electrically interrupted at a location, preferably as an almost closed ring conductor.

10. A device (1) according to claim 9, **characterised by** at least two of these ring conductors, wherein the at least two ring conductors are connected electrically in parallel.

11. A device (1) according to claim 10, **characterised in that** ring conductors with a different periphery have differently designed cross sections and/or have different distances to one another along the coil axis, so that they each have an approximately equal electrical resistance and produce an as homogeneous as possible field distribution along the rod axis.

12. A device (1) according to one of the preceding claims, **characterised in that** a conductor forming the induction coil (4) is designed as a hollow tube for leading a cooling fluid.

13. A device (1) according to one of the preceding claims, **characterised by** at least one further nozzle (33) which is arranged aligned to the atomisation nozzle (5) and which is preferably arranged between the material rod (3) and the atomisation nozzle (5), so that the melt flow (16) can also be led or is led through the further nozzle (33), wherein the further nozzle (33) is configured to accelerate a gas introduced with the melt flow (16) into the further nozzle (33), in a direction parallel to the melt flow (16), at least up to 0.5-fold the speed of sound of the gas introduced into the further nozzle (33).

14. A method for manufacturing powder by way of crucible-free melting of a material and by way of atomisation of the melted material by means of a device according to one of the preceding claims, comprising the steps:
at least partly introducing a material rod (3) into an induction coil (4) which tapers conically at least in sections;
subjecting the induction coil (4) to an alternating voltage for melting the material rod (3) and for producing a melt flow (16);
introducing the melt flow (16) into an atomisation nozzle (5) through a first opening (20) of the atomisation nozzle (5); and
introducing an atomisation gas (19) into the atomisation nozzle (5) and atomising the melt flow (16) by way of the atomisation gas (19);
wherein the atomisation gas (19) is only introduced into the atomisation nozzle (5) through the first opening (20) of the atomisation nozzle (5);
wherein the atomisation gas (19) which is to be introduced and/or is introduced into the atomisation nozzle (5) through the first opening (20) is accelerated in a direction parallel to a flow direction of the melt flow (16), at least up to the speed of the sound of the atomisation gas (19), so that the melt flow (16) divides up or even bursts and powder with a grain size in the micrometer range and/or sub-micrometer range is produced; and
wherein the melt flow (16) is inductively heated by the induction coil (4) before the entry of the melt flow (16) into the atomisation nozzle (5).

15. A method according to claim 14, wherein the atomisation gas (19) is accelerated parallel to the flow direction of the melt flow (16) along an acceleration path with a length LB, at least to the speed of sound of the atomisation gas (19), wherein for LB the following applies: LB < 5·dₘᵢₙ, wherein dₘᵢₙ (23) is the smallest diameter of the atomisation nozzle (5) perpendicular to the nozzle axis.

## Revendications

1. Dispositif (1) destiné à la fusion d'une matière sans creuset et l'atomisation de la matière fondue pour la préparation d'une poudre, comprenant :
une tuyère d'atomisation (5) formée sous la forme d'une tuyère de Laval et définissant un axe de tuyère (9) ;
une bobine d'induction (4) ayant des enroulements (4a-d) se resserrant au moins par sections en direction de la tuyère (5) ; et
une tige de matière (3) au moins partiellement insérée dans la bobine d'induction (4) ;
la bobine d'induction (4) étant agencée pour faire fondre la matière de la tige de matière (3) pour créer un flux de masse en fusion (16) ; et
la bobine d'induction (4) et la tuyère d'atomisation (5) étant disposées de manière à ce que le flux de masse en fusion (16) pour son atomisation au moyen d'un gaz d'atomisation (19) pouvant être introduit dans la tuyère d'atomisation (5) puisse être introduit ou est introduit dans la tuyère d'atomisation (5) par un premier orifice (20) de la tuyère d'atomisation (5) ;
**caractérisé en ce que**
la tuyère d'atomisation (5) est formée de telle sorte que le gaz d'atomisation (19) ne puisse être introduit dans la tuyère d'atomisation (5) ou n'est introduit que par le premier orifice (20) de la tuyère d'atomisation (5) ;
la tuyère d'atomisation (5) est agencée pour accélérer le gaz d'atomisation (19) laminairement dans une direction parallèle au flux de masse en fusion (16) au moins à la vitesse du son du gaz d'atomisation (19) ;
la bobine d'induction (4) et la tuyère d'atomisation (5) sont formées en tant que composants séparés et la bobine d'induction (4) est espacée de la tuyère d'atomisation (5) le long de l'axe de la tuyère (9) ;
la bobine d'induction (4) et la tuyère d'atomisation (5) étant disposées de manière à ce que aₘᵢₙ < 4·dₘᵢₙ, aₘᵢₙ soit la plus petite distance entre la bobine d'induction (4) et un plan (24) défini par la surface minimale en coupe de la tuyère d'atomisation (5) définie en perpendiculaire par rapport à l'axe (9) de la tuyère (5), et dₘᵢₙ étant
un plus petit diamètre intérieur de la tuyère d'atomisation (5) dans ledit plan (24) ; et
la tige de matière (3), la bobine d'induction (4) et la tuyère d'atomisation (5) étant disposées de telle sorte que le long de l'axe de la tuyère, au moins un enroulement de la bobine d'induction (4) soit disposé entre la tuyère d'atomisation (5) et une extrémité de la tige de matière (3) vis-à-vis de la tuyère d'atomisation (5), de sorte que le flux de masse en fusion (16) puisse être chauffé ou soit chauffé par induction de la bobine d'induction (4) avant que le flux de masse en fusion (16) ne pénètre dans la tuyère d'atomisation (5).

2. Dispositif (1) selon la revendication 1, **caractérisé en ce que** la matière à partir de laquelle la tige de matière (3) est élaborée comprend du métal ou de la céramique, le métal contenant de préférence de l'aluminium, du fer ou du titane.

3. Dispositif (1) selon l'une quelconque des revendications précédentes, **caractérisé en ce qu'**un plus petit diamètre intérieur dₘᵢₙ (23) de la tuyère d'atomisation (5) est inférieur à 7 mm.

4. Dispositif (1) selon l'une quelconque des revendications précédentes, **caractérisé en ce que** la tige de matière (3) et la tuyère d'atomisation (5) sont disposées de telle sorte que sur une distance la plus petite L (25) entre la tige de matière (3) et ledit plan (24) soit applicable : L ≤ 5·dₘᵢₙ.

5. Dispositif (1) selon l'une quelconque des revendications précédentes, **caractérisé en ce que** : aₘᵢₙ ≤ 3·dₘᵢₙ.

6. Dispositif (1) selon l'une quelconque des revendications précédentes, **caractérisé en ce que** la tuyère d'atomisation (5) est formée d'une matière de tuyère dont la résistance électrique spécifique est : ρ ≤ 0.02·10-6 Ωm ou ρ > 10-2 Ωm pour minimiser une quantité de chaleur dissipée dans la tuyère d'atomisation (5) par l'action de la bobine d'induction (4).

7. Dispositif (1) selon l'une quelconque des revendications précédentes, **caractérisé par** une chambre haute pression (7), une chambre d'atomisation (8) en communication fluidique avec la chambre haute pression (7) par le biais de la tuyère d'atomisation (5), de premiers moyens de régulation de pression (17) pour introduire le gaz d'atomisation (19) dans la chambre haute pression (7) et pour réguler une première pression de gaz p₁ dans la chambre haute pression (7), ainsi que de seconds moyens de régulation de pression (18) pour réguler une seconde pression de gaz p₂ dans la chambre d'atomisation (8), les premiers et seconds moyens de régulation de pression étant agencés pour réguler les pressions p₁ et p₂ pour accélérer le gaz d'atomisation (19) dans une direction parallèle à la direction d'écoulement du flux de masse en fusion (16) de telle sorte que soit applicable : p₁/p₂ > 1,8 et p₁ > 10 bar.

8. Dispositif (1) selon l'une quelconque des revendications précédentes, caractérisé en ce l'un des enroulements (4a-d) au moins de la bobine d'induction (4) est disposé dans la zone d'une extrémité (15) de la tige de matière (3) vis-à-vis de la tuyère d'atomisation (5), à savoir de préférence au moins le dernier enroulement (4d) de la bobine d'induction (4) vis-à-vis de la tuyère d'atomisation (5) pour générer un champ électromagnétique aussi symétrique que possible dans cette zone par rapport à un axe de tige de la tige de matière (3), a un parcours au moins en sections perpendiculaire à cet axe.

9. Dispositif (1) selon la revendication 8, **caractérisé en ce qu'**un enroulement (4d) au moins est formé sous la forme d'un conducteur annulaire électriquement interrompu en un point, de préférence comme conducteur annulaire pratiquement fermé.

10. Dispositif (1) selon la revendication 9, **caractérisé par** au moins deux de ces conducteurs annulaires, les au moins deux conducteurs annulaires étant montés électriquement en parallèle.

11. Dispositif (1) selon la revendication 10, **caractérisé en ce que** les conducteurs annulaires de circonférences différentes ont des sections transversales de forme différente et/ou des distances différentes les uns des autres le long de l'axe de la bobine, de sorte qu'ils présentent chacun une résistance électrique approximativement identique et qu'ils génèrent une répartition de champ aussi homogène que possible le long de l'axe de la tige.

12. Dispositif (1) selon l'une quelconque des revendications précédentes, **caractérisé en ce qu'**un conducteur formant la bobine d'induction (4) pour guider un liquide de refroidissement est formé comme un tube creux.

13. Dispositif (1) selon l'une quelconque des revendications précédentes, **caractérisé par** au moins une tuyère supplémentaire (33) qui est disposée alignée avec la tuyère d'atomisation (5) et qui est de préférence disposée entre la tige de matière (3) et la tuyère d'atomisation (5), de sorte que le flux de masse en fusion (16) peut également être ou est guidé à travers la tuyère supplémentaire (33), la tuyère supplémentaire (33) étant agencée pour accélérer un gaz introduit avec le flux de masse en fusion (16) dans la tuyère supplémentaire (33) dans une direction parallèle au flux de masse en fusion (16) à au moins jusqu'à 0,5 fois la vitesse du son du gaz introduit dans la tuyère supplémentaire (33).

14. Méthode pour la préparation d'une poudre par fusion d'une matière sans creuset et l'atomisation de la matière fondue au moyen du dispositif selon l'une quelconque des revendications précédentes, comprenant les étapes ci-après :
introduction au moins partielle d'une tige de matière (3) dans une bobine d'induction (4) se rétrécissant en cône au moins par sections ;
application d'une tension alternative à la bobine d'induction (4) pour faire fondre la tige de matière (3) et pour générer un flux de masse en fusion (16) ;
introduction du flux de masse en fusion (16) dans une tuyère d'atomisation (5) par un premier orifice (20) de la tuyère d'atomisation (5) ; et
introduction d'un gaz d'atomisation (19) dans la tuyère d'atomisation (5) et atomisation du flux de masse en fusion (16) au moyen du gaz d'atomisation (19) ;
le gaz d'atomisation (19) n'étant introduit dans la tuyère d'atomisation (5) que par le premier orifice (20) de la tuyère d'atomisation (5) ;
le gaz d'atomisation (19) à introduire et/ou introduit dans la tuyère d'atomisation (5) par le premier orifice (20) étant accéléré laminairement dans une direction parallèle à une direction d'écoulement du flux de masse en fusion (16) au moins à la vitesse du son du gaz d'atomisation (19) de sorte que le flux de masse en fusion (16) se divise ou éclate même, et
la poudre étant préparée avec une granulométrie de l'ordre du micromètre et/ou du submicromètre ; et
le flux de masse en fusion (16) étant chauffé par induction de la bobine d'induction (4) avant que le flux de masse en fusion (16) ne pénètre dans la tuyère d'atomisation (5).

15. Méthode selon la revendication 14, dans laquelle le gaz d'atomisation (19) est accéléré dans une direction parallèle à la direction d'écoulement du flux de masse en fusion (16) le long d'une trajectoire d'accélération ayant une longueur LB au moins jusqu'à la vitesse du son du gaz d'atomisation (19), pour LB étant appliqué : LB < 5·dₘᵢₙ, dₘᵢₙ (23) étant le plus petit diamètre de la tuyère d'atomisation (5) perpendiculaire à l'axe de tuyère.
